# EUROPEAN PATENT APPLICATION

(11) **EP 3 590 689 A1**
(43) Date of publication of application: **08.01.2020**
(21) Application number: 19182164.4
(22) Date of filing: 25.06.2019
(51) Int. Cl.: B29C 65/08, B29C 65/00

(54) **ULTRASONIC SEALING UNIT**

(30) Priority: 03.07.2018 JP 2018127087
(71) Applicant: ISHIDA CO., Ltd., Kyoto-shi, Kyoto 606-8392 (JP)
(72) Inventor: Shimoda, Takafumi, Shiga 520-3026 (JP)
(74) Representative: Gill Jennings & Every LLP

(57) **Abstract**

An ultrasonic sealing unit (50) is equipped with a converter (50a), a horn (50b), a fixing member (50f, 50e), and a retaining member. The converter generates ultrasonic waves from an electrical signal. The horn vibrates because of the ultrasonic waves generated by the converter. The fixing member is a member for fixing the ultrasonic sealing unit. The retaining member is a member for retaining the ultrasonic sealing unit in a position different from the position where the ultrasonic sealing unit is fixed by the fixing member. The ultrasonic sealing unit may reduce vibration transmitted to the surroundings.

## Description

### CROSS-REFERENCE TO RELATED APPLICATIONS

This application claims priority to Japanese Patent Application No. JP 2018-127087 filed July 3, 2018, the contents of which are incorporated by reference herein in their entirety.

### BACKGROUND

### TECHNICAL FIELD

The present invention relates to an ultrasonic sealing unit for joining plural sheets that overlap each other.

### RELATED ART

Conventionally, a bag making and packaging machine that fills, with contents such as food, bags formed from a film that is a sheet-like packaging material and hermetically packages the contents has been used. The bag making and packaging machine is equipped with a forming mechanism, which forms the sheet-like film into a tubular shape, and a longitudinal sealing mechanism, which seals in the longitudinal direction the overlapping portion of both end portions of the film that has been formed into a tubular shape. For example, patent document 1 (JP-A No. 2009-280258) discloses a longitudinal sealing mechanism equipped with an ultrasonic sealing unit. The ultrasonic sealing unit sandwiches, between a horn and an anvil, the overlapping portion of the tubular film and causes the horn to ultrasonically vibrate, thereby ultrasonically welding and sealing the overlapping portion.

### BRIEF SUMMARY

The ultrasonic sealing unit is fixed to the longitudinal sealing mechanism at the position of a node of the ultrasonic vibration that occurs in the ultrasonic sealing unit. However, in this case also, the ultrasonic vibration of the ultrasonic sealing unit is transmitted to the longitudinal sealing mechanism and sometimes causes abnormal sounds that come from the bag making and packaging machine. For that reason, it is preferred to ensure as much as possible that the vibration of the ultrasonic sealing unit does not become transmitted to the outside.

It is an object of the present invention to provide an ultrasonic sealing unit that can reduce vibration transmitted to the outside.

An ultrasonic sealing unit pertaining to the invention is equipped with a converter, a horn, a fixing member, and a retaining member. The converter generates ultrasonic waves from an electrical signal. The horn vibrates because of the ultrasonic waves generated by the converter. The fixing member is a member for fixing the ultrasonic sealing unit. The retaining member is a member for retaining the ultrasonic sealing unit in a position different from the position where the ultrasonic sealing unit is fixed by the fixing member.

This ultrasonic sealing unit is fixed to an external member and is retained in a position different from the position where it is fixed. Because of this, vibration transmitted to the outside is reduced compared to a case where the ultrasonic sealing unit is just fixed.

Furthermore, it is preferred that the fixing member be located in the position of a node of the ultrasonic vibration of the ultrasonic sealing unit and that the retaining member be located in a position other than a node of the ultrasonic vibration of the ultrasonic sealing unit.

This ultrasonic sealing unit is retained in a position other than a node of the ultrasonic vibration, so the effect that being retained has on the ultrasonic vibration is reduced. For that reason, a reduction in seal quality caused by the ultrasonic sealing unit being retained is inhibited.

Furthermore, it is preferred that the retaining member be located in a position different from the fixing member in the direction of the ultrasonic vibration of the ultrasonic sealing unit.

This ultrasonic sealing unit is retained in a position different from the position where it is fixed, so the effect that being retained has on the ultrasonic vibration is reduced. For that reason, a reduction in seal quality caused by the ultrasonic sealing unit being retained is inhibited.

Furthermore, it is preferred that the ultrasonic sealing unit be further equipped with a booster. The booster is installed between the converter and the horn and amplifies the ultrasonic waves generated by the converter. The fixing member is attached to the booster.

This ultrasonic sealing unit is fixed in the position of the booster where there is a node of the ultrasonic vibration, so vibration transmitted to the outside can be reduced.

Furthermore, it is preferred that the retaining member retain the ultrasonic sealing unit via an elastic member.

This ultrasonic sealing unit is retained via the elastic member, so a reduction in seal quality caused by the ultrasonic sealing unit being retained can be inhibited.

Furthermore, it is preferred that the retaining member be attached to the converter. This ultrasonic sealing unit is retained in the position of the converter, so a reduction in seal quality caused by the ultrasonic sealing unit being retained can be inhibited.

The ultrasonic sealing unit pertaining to the invention can reduce vibration transmitted to the outside.

### BRIEF DESCRIPTION OF THE DRAWINGS

FIG. 1 is a perspective view of a bag making and packaging machine 1 that is an embodiment of the invention;
FIG. 2 is a side view showing the schematic configuration of the bag making and packaging machine 1;
FIG. 3 is a block diagram of a control unit 7;
FIG. 4 is a perspective view showing the schematic configuration of a bag making and packaging unit 3;
FIG. 5 is an external view of a pillow bag manufactured by the bag making and packaging unit 3;
FIG. 6 is a perspective view of the bag making and packaging unit 3 as seen from the front right side;
FIG. 7 is a perspective view of the bag making and packaging unit 3 as seen from the back right side;
FIG. 8 is a perspective view of the bag making and packaging unit 3 as seen from the front right side;
FIG. 9 is a perspective view of the area around an anvil 51 as seen from the front right side;
FIG. 10 is an external view of an ultrasonic sealing unit 50 as seen from the front right side;
FIG. 11 is a longitudinal sectional view of the ultrasonic sealing unit 50;
FIG. 12 is an external view of an aligning mechanism between a former structure and a longitudinal sealing structure in example modification B; and
FIG. 13 is a longitudinal sectional view of the aligning mechanism between the former structure and the longitudinal sealing structure in example modification B.

### DETAILED DESCRIPTION

An embodiment of the present invention will be described with reference to the drawings. The embodiment described below is a specific example of the invention and is not intended to limit the technical scope of the invention.

### (1) Configuration of Bag Making and Packaging Machine

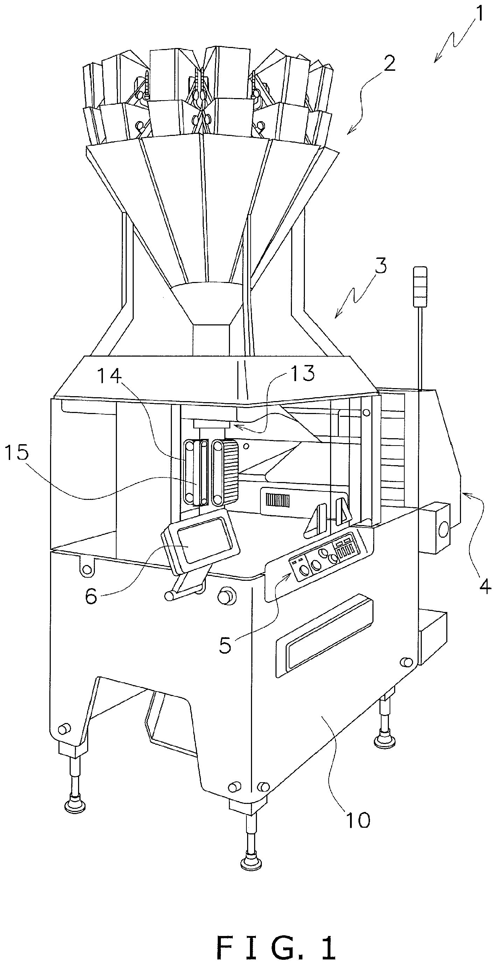

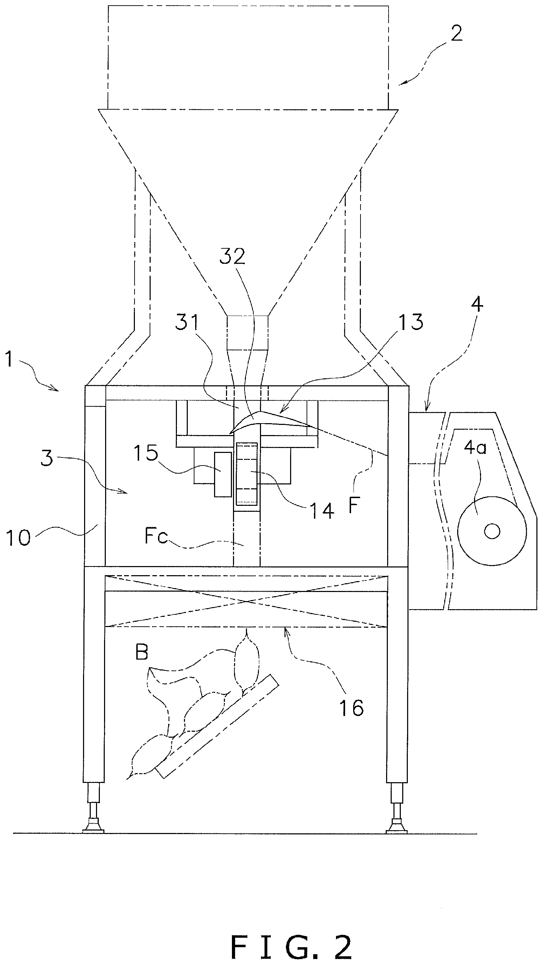

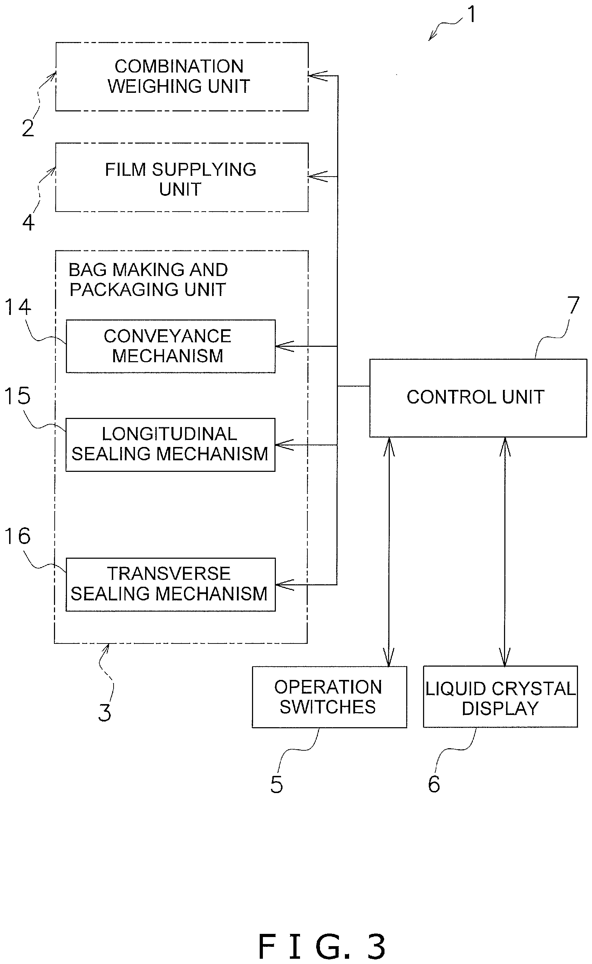

FIG. 1 is a perspective view of a bag making and packaging machine 1 that is an embodiment of the invention. FIG. 2 is a side view showing the schematic configuration of the bag making and packaging machine 1. The bag making and packaging machine 1 is a machine for bagging contents such as food. The bag making and packaging machine 1 is mainly configured from a combination weighing unit 2, a bag making and packaging unit 3, a film supplying unit 4, operation switches 5, a liquid crystal display 6, a control unit 7 (see FIG. 3), and a body frame 10.

The combination weighing unit 2 is disposed above the bag making and packaging unit 3. The combination weighing unit 2 weighs, with plural weighing hoppers, the weights of the contents and combines the values of the weights that have been weighed by each weighing hopper so as to reach a predetermined total weight. The combination weighing unit 2 discharges downward and supplies to the bag making and packaging unit 3 the contents having the combined predetermined total weight.

The bag making and packaging unit 3 seals in bags and packages the contents in accordance with the timing when the contents are supplied from the combination weighing unit 2. The detailed configuration and operation of the bag making and packaging unit 3 will be described later.

The film supplying unit 4 is installed adjacent to the bag making and packaging unit 3 and supplies to the bag making and packaging unit 3 a film F that becomes formed into bags. A film roll 4a wound with the film F is set in the film supplying unit 4. The film supplying unit 4 pays out the film F from the film roll 4a and supplies the film F to the bag making and packaging unit 3.

The operation switches 5 and the liquid crystal display 6 are attached to the front of the bag making and packaging machine 1 body. The liquid crystal display 6 is a touch panel display disposed in a position where the operator of the operation switches 5 can see it. The operation switches 5 and the liquid crystal display 6 function as input devices that receive instructions with respect to the bag making and packaging machine 1 and settings relating to the bag making and packaging machine 1. The liquid crystal display 6 functions as an output device that displays information relating to the bag making and packaging machine 1.

The control unit 7 is a computer configured from a CPU, a ROM, and a RAM, for example. FIG. 3 is a block diagram of the control unit 7. The control unit 7 is connected to the combination weighing unit 2, the bag making and packaging unit 3, the film supplying unit 4, the operation switches 5, and the liquid crystal display 6. The control unit 7 controls the combination weighing unit 2, the bag making and packaging unit 3, and the film supplying unit 4 on the basis of input from the operation switches 5 and the liquid crystal display 6 and outputs various types of information to the liquid crystal display 6.

The body frame 10 directly or indirectly supports the combination weighing unit 2, the bag making and packaging unit 3, the film supplying unit 4, the operation switches 5, the liquid crystal display 6, and the control unit 7.

### (2) Configuration of Bag Making and Packaging Unit

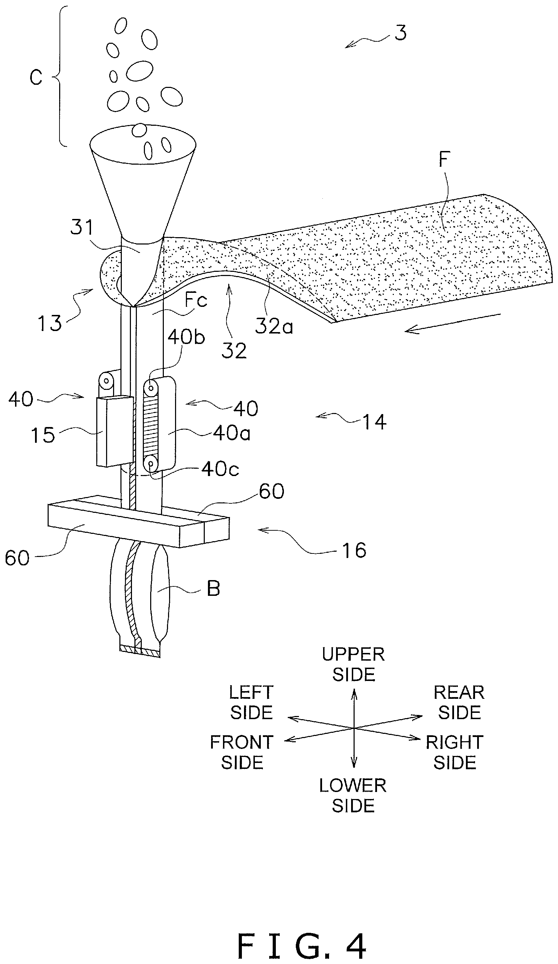

FIG. 4 is a perspective view showing the schematic configuration of the bag making and packaging unit 3. In the following description, the six directions of "front (front surface)," "rear (back surface)," "up," "down," "left," and "right" are defined as shown in FIG. 4.

The bag making and packaging unit 3 is mainly equipped with a forming mechanism 13, a conveyance mechanism 14, a longitudinal sealing mechanism 15, a transverse sealing mechanism 16, a hinge fixing mechanism 17, and a clamp fixing mechanism 18. The forming mechanism 13 forms into a cylindrical shape the sheet-like film F that is supplied from the film supplying unit 4. The conveyance mechanism 14 conveys downward the film F that has been formed into a cylindrical shape. The longitudinal sealing mechanism 15 seals, in the longitudinal direction parallel to the conveyance direction, the overlapping portion of both end portions of the film F that has been formed into a cylindrical shape to thereby form a cylindrical film Fc. The transverse sealing mechanism 16 seals the cylindrical film Fc in the transverse direction orthogonal to the conveyance direction to thereby form pillow bags B whose upper end portions and lower end portions have been transversely sealed. The hinge fixing mechanism 17 fixes main parts of the longitudinal sealing mechanism 15 to the body frame 10. The clamp fixing mechanism 18 fixes the forming mechanism 13 and main parts of the longitudinal sealing mechanism 15 to each other.

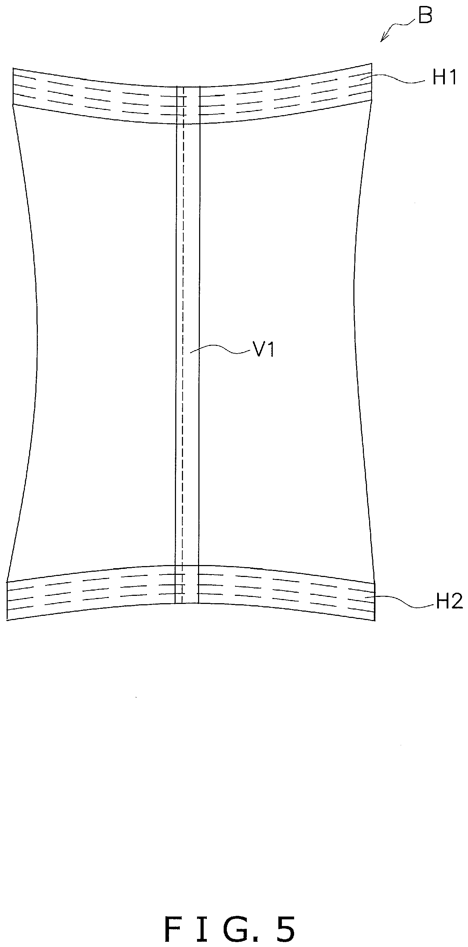

FIG. 5 is an external view of a pillow bag B that is manufactured by the bag making and packaging machine 1. The bag B has a vertical seal V1 that extends in the longitudinal direction and horizontal seals H1, H2 that extend in the transverse direction. The longitudinal sealing mechanism 15 ultrasonically seals the cylindrical film Fc to thereby form the vertical seal V1. The transverse sealing mechanism 16 ultrasonically seals the cylindrical film Fc in which the vertical seal V1 has been formed to thereby form the horizontal seals H1, H2.

### (2-1) Forming Mechanism

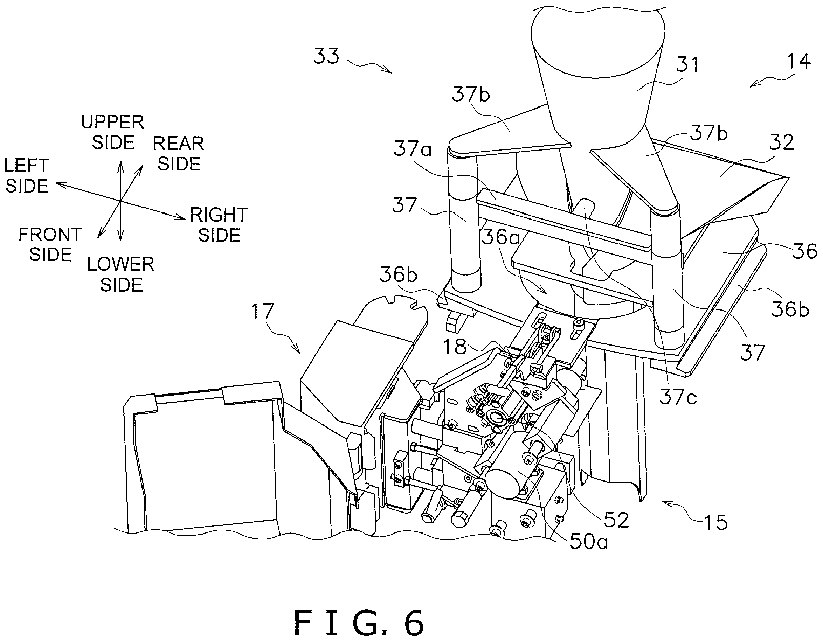

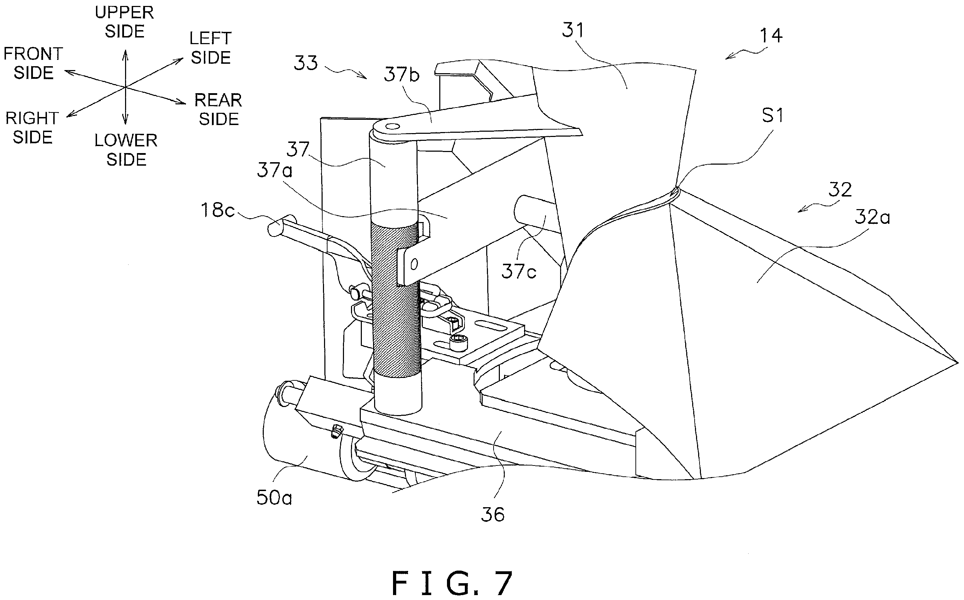

FIG. 6 is a perspective view of the bag making and packaging unit 3 as seen from the front right side. FIG. 7 is a perspective view of the bag making and packaging unit 3 as seen from the back right side. As shown in FIG. 6 and FIG. 7, the forming mechanism 13 has a tube 31, a sailor's collar 32, and a support frame 33. The support frame 33 directly supports the tube 31 and the sailor's collar 32. In FIG. 6 and FIG. 7, part of the configuration around a later-described converter 50a is omitted for convenience.

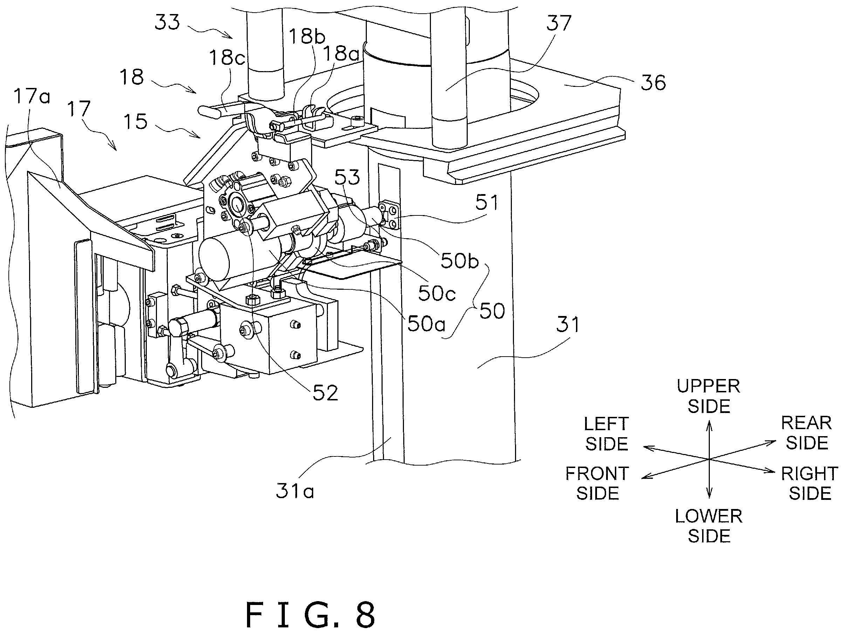

The tube 31 is a substantially open cylinder-shaped member that extends in substantially the up and down direction. A flat surface 31a is partially formed in the front surface side of the tube 31 (see FIG. 8). The flat surface 31a extends in substantially the vertical direction. The tube 31 has openings in its upper and lower ends. The upper portion of the tube 31 has a funnel shape. Contents C that drop a predetermined quantity at a time from the combination weighing unit 2 (see FIG. 1) are input to the inside of the tube 31 through the opening in the upper end of the tube 31 and fall through the inside of the tube 31 as shown in FIG. 4.

The sailor's collar 32 is disposed surrounding the tube 31. The sailor's collar 32 guides the film F so as to wrap the sheet-like film F around the tube 31. The sailor's collar 32 has an inclined surface 32a. The sheet-like film F that has been paid out from the film roll 4a is conveyed diagonally upward along the inclined surface 32a while contacting the inclined surface 32a.

As shown in FIG. 7, a tiny space S1 is formed between the outer surface of the tube 31 and the sailor's collar 32. The space S1 exists along the entire circumference of the tube 31. The film F that has climbed to the top of the inclined surface 32a is inserted into the space S1. The film F becomes wrapped around the outer surface of the tube 31 as it passes through the space S1. As a result, the film F is formed from a sheet-like shape into an open cylinder shape. When the sheet-like film F is formed into an open cylinder shape, the left edge and the right edge of the film F overlap each other. Thereafter, the cylindrical film Fc is conveyed downward along the outer surface of the tube 31 so as to envelop the tube 31.

As shown in FIG. 7, the support frame 33 has a plate member 36, a pair of right and left handles 37, 37, a crossbeam 37a, a pair of right and left crossbeams 37b, 37b, and a crossbeam 37c. The plate member 36, the handles 37, 37, and the crossbeams 37a, 37b, 37b, 37c are appropriately fixed, and their mutual positional relationships are unchanging.

The plate member 36 is a member that is substantially rectangular in shape as seen in a plan view. An opening 36a that is substantially circular as seen in a plan view is formed in the center of the plate member 36. The tube 31 is disposed running vertically through the opening 36a. The handles 37, 37 are disposed extending upward from front right and left areas of the plate member 36. The crossbeam 37a bridges substantial centers of the handles 37, 37. The crossbeams 37b, 37b bridge upper ends of the handles 37, 37 and the tube 31. The crossbeam 37c bridges the center of the crossbeam 37a and the tube 31. The tube 31 is fixed to the crossbeams 37b, 37b, 37c. As a result, the tube 31 is fixed to the support frame 33.

Although not shown in the drawings, the sailor's collar 32 is also fixed to the support frame 33. As a result, the positional relationship between the tube 31 and the sailor's collar 32 is fixed via the support frame 33.

Slide rails 36b, 36b are formed on right and left sides of the plate member 36 so as to extend in the forward and rearward direction. The slide rails 36b, 36b receive, slidably in the forward and rearward direction, shafts that are part of the body frame 10 and extend in the forward and rearward direction. A user standing in front of the bag making and packaging machine 1 can replace the entire forming mechanism 13 by gripping the handles 37, 37 and sliding the shafts of the body frame 10 along the slide rails 36b, 36b. The shapes and sizes of the tube 31 and the sailor's collar 32 differ depending on the shape and size of the bags B to be manufactured. The user can easily attach to the bag making and packaging machine 1 the forming mechanism 13 corresponding to the bags B to be manufactured.

### (2-2) Conveyance Mechanism

The conveyance mechanism 14 has a right and left pair of pull-down belt mechanisms 40, 40. As shown in FIG. 4, the pull-down belt mechanism 40, 40 are disposed symmetrically on the right and left sides of the tube 31. The pull-down belt mechanisms 40, 40 each extend in the up and down direction along the tube 31.

The pull-down belt mechanisms 40, 40 each have drive rollers 40b, 40b, follower rollers 40c, 40c, and belts 40a, 40a. The drive rollers 40b, 40b are driven by motors not shown in the drawings. The follower rollers 40c, 40c each rotate in accordance with the rotation of the drive rollers 40b, 40b. The belts 40a, 40a suck the cylindrical film Fc. As a result, the pull-down belt mechanisms 40, 40 convey the cylindrical film Fc downward along the outer surface of the tube 31 while sucking the cylindrical film Fc.

### (2-3) Longitudinal Sealing Mechanism

The longitudinal sealing mechanism 15 seals in the longitudinal direction (the up and down direction in FIG. 4) the film F that has been formed into a cylindrical shape. The longitudinal sealing mechanism 15 is disposed on the front side of the tube 13a. The longitudinal sealing mechanism 15 moves in forward and rearward directions toward the tube 13a or away from the tube 13a.

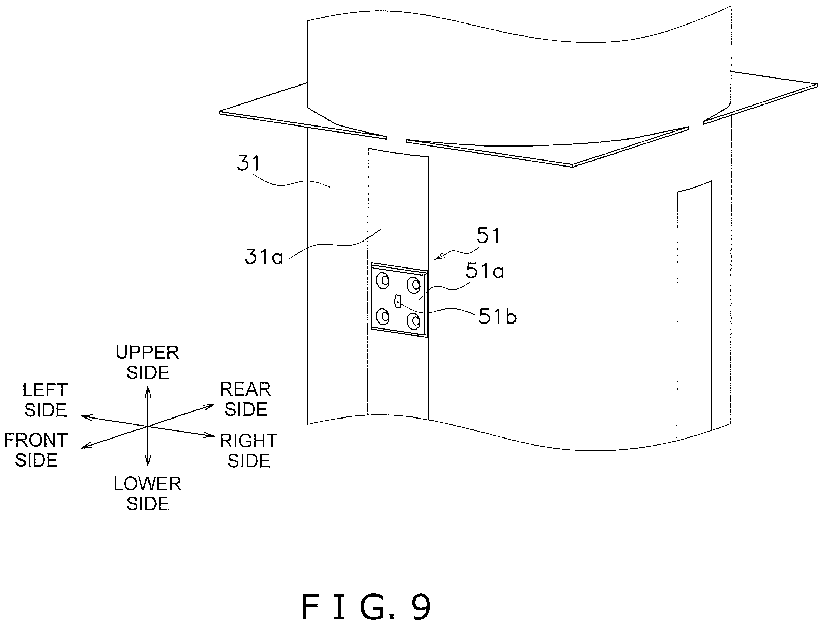

The longitudinal sealing mechanism 15 mainly has an ultrasonic sealing unit 50, an anvil 51, an air cylinder component 52, and an air blowing component 53. FIG. 8 is a perspective view of the bag making and packaging unit 3 as seen from the front right side. In FIG. 8, part of the configuration around the later-described converter 50a is omitted for convenience. FIG. 9 is a perspective view of the area around the anvil 51 as seen from the front right side.

The ultrasonic sealing unit 50 has a converter 50a, a horn 50b, and a booster 50c. The horn 50b, the booster 50c, and the converter 50a are disposed in this order in substantially the horizontal direction heading from the back side toward the front side. The air cylinder component 52 is disposed directly above the booster 50c and the converter 50a. The converter 50a is connected to a high-frequency power source not shown in the drawings. The converter 50a has a piezoelectric device and generates ultrasonic waves from an electrical signal. Specifically, the piezoelectric device of the converter 50a expands and contracts when a high-frequency AC voltage is supplied thereto from the high-frequency power source. Because of this, the converter 50a converts electrical energy into mechanical vibratory energy and generates the ultrasonic waves. The horn 50b is a resonator to which the vibratory energy of the ultrasonic waves generated by the converter 50a is transmitted. The booster 50c is disposed between the converter 50a and the horn 50b. The booster 50c amplifies the ultrasonic waves generated by the converter 50a and also has the role of fixing the ultrasonic sealing unit 50. The behavior of the ultrasonic sealing unit 50 is controlled by the control unit 7. The detailed configuration of the ultrasonic sealing unit 50 will be described later.

As shown in FIG. 9, the anvil 51 is fixed to the tube 31 so as to project forward from the flat surface 31a of the tube 31. The anvil 51 is made of metal. The anvil 51 has a plate 51a, which is substantially rectangular in shape as seen in a front view, and a projecting portion 51b, which projects forward from the center of the plate 51a. The anvil 51 is immovable. The projecting portion 51b is disposed facing the horn 50b. The overlapping portion of the cylindrical film Fc is conveyed substantially vertically downward while being sandwiched between the horn 50b and the anvil 51. The overlapping portion of the cylindrical film Fc is welded by frictional heat resulting from the vibratory energy of the ultrasonic waves propagated from the horn 50b as the overlapping portion passes between the horn 50b and the anvil 51. Because of this, the overlapping portion of the cylindrical film Fc is ultrasonically sealed in the longitudinal direction. As a result, the vertical seal V1 is formed in the front center of the cylindrical film Fc.

The anvil 51 is fastened with machine screws to the flat surface 31a of the tube 31 near the upper end thereof. The anvil 51 is attachable to and detachable from the tube 31. Consequently, even if the anvil 51 becomes worn, just the anvil 51 can be replaced while leaving the tube 31 in place.

The air cylinder component 52 reciprocally moves the ultrasonic sealing unit 50 in substantially the horizontal direction with respect to the anvil 51. As a result, the air cylinder component 52 applies pressure to the horn 50b with respect to the overlapping portion of the cylindrical film Fc and the anvil 51. The air cylinder component 52 is controlled by the control unit 7.

The air blowing component 53 is disposed directly under the ultrasonic sealing unit 50, that is, directly downstream of the ultrasonic sealing unit 50 and the anvil 51 along the direction in which the cylindrical film Fc advances. The air blowing component 53 blows air from an air outlet. The air is blown toward the overlapping portion of the cylindrical film Fc just after the cylindrical film Fc has passed the horn 50b and the anvil 51. As a result, cooling and setting of the overlapping portion of the cylindrical film Fc that has been heat-welded by the ultrasonic waves from the horn 50b is accelerated. The volume of air blown by the air blowing component 53 and the timing of the blowing are controlled by the control unit 7.

### (2-4) Transverse Sealing Mechanism

As shown in FIG. 4, the transverse sealing mechanism 16 has a front and rear pair of sealing jaws 60, 60 and drive devices (not shown in the drawings) that drive the sealing jaws 60, 60. The sealing jaws 60, 60 are disposed symmetrically on the front and rear sides of the cylindrical film Fc. The sealing jaws 60, 60 each extend in the right and left direction. One sealing jaw 60 has one vibrator, and the other sealing jaw 60 has one anvil. The vibrator and the anvil each extend in the right and left direction.

The sealing jaws 60, 60 symmetrically move in sync with each other in forward and rearward directions toward and away from the cylindrical film Fc while revolving in the shape of a D as seen in a left or right side view. The vibrator and the anvil attached to the same sealing jaws 60 are disposed in positions substantially 180° apart from each other with respect to the rotational centers of the sealing jaws 60. When the sealing jaws 60, 60 are closest to each other, the cylindrical film Fc is sandwiched between the horn of the vibrator attached to the one sealing jaw 60 and the anvil attached to the other sealing jaw 60. The portion of the cylindrical film Fc sandwiched between the horn and the anvil of the sealing jaws 60, 60 is ultrasonically sealed in the right and left direction. The horizontal seal H1 in the upper portion of a preceding bag B and the horizontal seal H2 in the lower portion of a subsequently manufactured bag B are simultaneously formed by one sandwiching operation.

A cutter is built into one sealing jaw 60. The cutter cuts the cylindrical film Fc in the right and left direction as the sealing jaws 60, 60 are sandwiching the cylindrical film Fc. As a result, the bag B is cut away from the cylindrical film Fc.

### (2-5) Hinge Fixing Mechanism

The hinge fixing mechanism 17 fixes a longitudinal sealing structure to the body frame 10. The longitudinal sealing structure is a structure comprising main parts of the longitudinal sealing mechanism 15. More specifically, the longitudinal sealing structure comprises constituent elements excluding the anvil 51 of the aforementioned constituent elements of the longitudinal sealing mechanism 15. The longitudinal sealing structure is configured as a result of those constituent elements being appropriately fixed.

The hinge fixing mechanism 17 comprises a frame case 17a and various hinges. The frame case 17a is fixed to the body frame 10. The frame case 17a partially houses the longitudinal sealing structure. The longitudinal sealing structure is fixed by machine screws, for example, to the frame case 17a. The longitudinal sealing structure is integrally attachable to and detachable from the frame case 17a. The various hinges are disposed in a foldable part of the frame case 17a. When the various hinges open and close, the frame case 17a folds in the horizontal direction at the foldable part. When the frame case 17a is folded at the foldable part, the longitudinal sealing structure moves with respect to the tube 31 without changing its height position. The user can adjust the positional relationship between the ultrasonic sealing unit 50 and horn 50b included in the longitudinal sealing structure and the anvil 51 fixed to the tube 31 by adjusting the opened/closed degree of the various hinges. Although not shown in the drawings, the hinge fixing mechanism 17 has anchors for maintaining the opened/closed degree of the various hinges after adjustment.

### (2-6) Clamp Fixing Mechanism

The clamp fixing mechanism 18 fixes a former structure and the longitudinal sealing structure to each other. The former structure is a structure comprising the forming mechanism 13 and the anvil 51. The former structure is configured as a result of its constituent elements being appropriately fixed. The former structure is integrally attachable to and detachable from the body frame 10. This attachment/detachment is realized by sliding the shafts that are part of the body frame 10 in the slide rails 36b, 36b that are part of the former structure.

The clamp fixing mechanism 18 has a claw hook 18a, a looped hook 18b, and a lever 18c. As shown in FIG. 8, the claw hook 18a is fixed to the front center of the plate member 36 of the support frame 33 included in the former structure. The looped hook 18b is fixed to the longitudinal sealing structure. When the lever 18c is tightened in a state in which the looped hook 18b is hooked onto the claw hook 18a, the positional relationship between the former structure and the longitudinal sealing structure becomes fixed. In other words, the positional relationship between the horn 50b of the ultrasonic sealing unit 50 included in the longitudinal sealing structure and the anvil 51 fixed to the tube 31 can be fixed by the clamp fixing mechanism 18.

The clamp fixing mechanism 18 fixes, so as to reinforce, the positional relationship between the former structure and the longitudinal sealing structure fixed by the hinge fixing mechanism 17. The hinge fixing mechanism 17 fixes the positional relationship between the former structure and the longitudinal sealing structure so that it does not change mainly in the horizontal direction. The clamp fixing mechanism 18 fixes the positional relationship between the former structure and the longitudinal sealing structure so that it does not change mainly in the vertical direction. Consequently, the positional relationship between the horn 50b of the ultrasonic sealing unit 50 and the anvil 51 is appropriately maintained by the hinge fixing mechanism 17 and the clamp fixing mechanism 18.

In a state in which the hinge fixing mechanism 17 and the clamp fixing mechanism 18 are fixing the former structure and the longitudinal sealing structure to each other, the air cylinder component 52 moves the ultrasonic sealing unit 50 in a direction heading substantially from the horn 50b toward the anvil 51 to apply pressure to the cylindrical film Fc. In other words, the longitudinal sealing structure allows the ultrasonic sealing unit 50 to move in a direction heading substantially from the horn 50b toward the anvil 51. At the same time, in a state in which the hinge fixing mechanism 17 and the clamp fixing mechanism 18 are fixing the former structure and the longitudinal sealing structure to each other, the ultrasonic sealing unit 50 is fixed in directions other than the direction heading substantially from the horn 50b toward the anvil 51. In other words, the longitudinal sealing structure supports the ultrasonic sealing unit 50 in such a way that the ultrasonic sealing unit 50 cannot move in directions other than the direction heading substantially from the horn 50b toward the anvil 51.

### (3) Detailed Configuration of Ultrasonic Sealing Unit

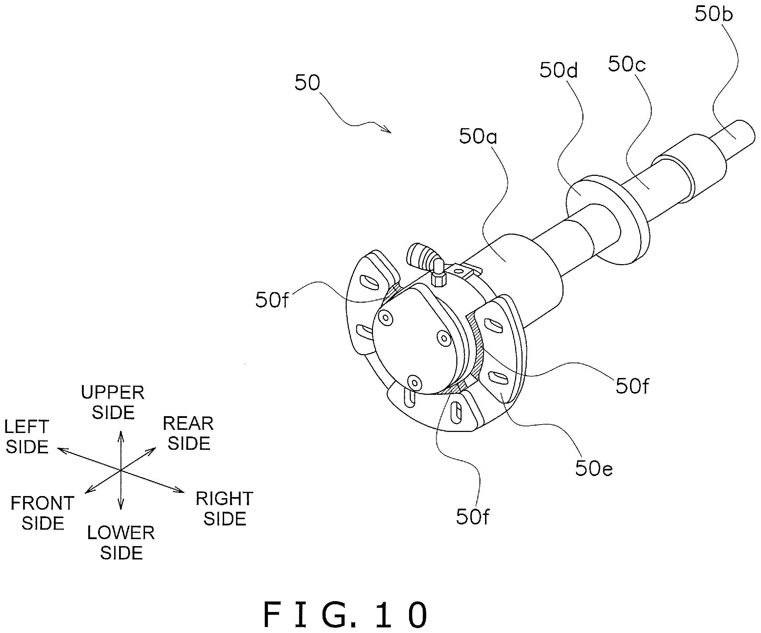

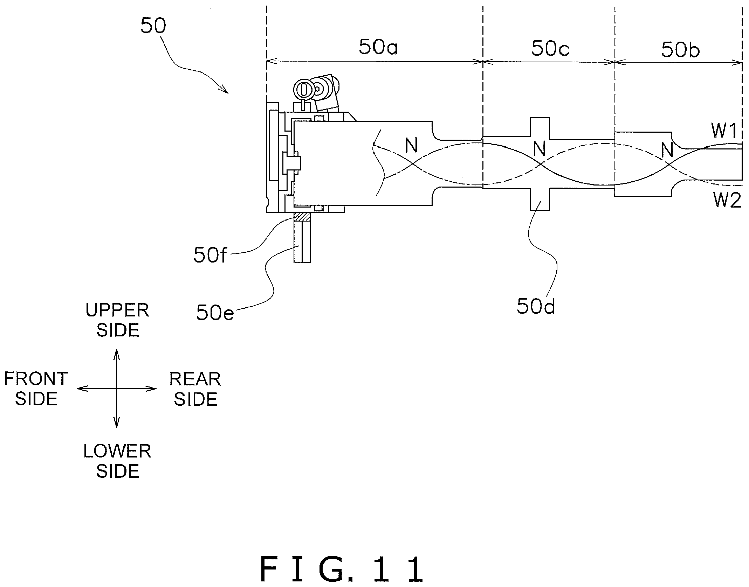

FIG. 10 is an external view of the ultrasonic sealing unit 50 as seen from the front right side. FIG. 11 is a longitudinal sectional view of the ultrasonic sealing unit 50. FIG. 11 is a sectional view in a case where the ultrasonic sealing unit 50 is cut in the vertical direction along the longitudinal direction of the ultrasonic sealing unit 50 (the forward and rearward direction) heading from the front side to the back side.

In the ultrasonic sealing unit 50, the converter 50a, the booster 50c, and the horn 50b are disposed in this order heading from the front side toward the back side. The longitudinal sealing structure including the ultrasonic sealing unit 50 is fixed to the body frame 10 via the hinge fixing mechanism 17. That is, the ultrasonic sealing unit 50 is fixed to the bag making and packaging machine 1.

In the ultrasonic sealing unit 50, an annular fixing member 50d that has a substantially open cylinder shape and projects outward is attached to the booster 50c. The fixing member 50d is a member for fixing the ultrasonic sealing unit 50 to the bag making and packaging machine 1. The fixing member 50d is attached by screws or clamps, for example, to an attachment member 17a that is an external member. The attachment member 17a is connected to the hinge fixing mechanism 17. In this way, the ultrasonic sealing unit 50 is fixed by the fixing member 50d to the bag making and packaging machine 1. As shown in FIG. 11, the booster 50c and the fixing member 50d are integrally formed. However, the fixing member 50d may also be an independent member that becomes attached and fixed to the booster 50c.

In the ultrasonic sealing unit 50, the converter 50a is in contact with a retaining member 50e. The ultrasonic sealing unit 50 is retained by the retaining member 50e. Here, "retained" does not mean directly fixed by screws or clamps, for example, to an external member but rather means in contact with an external member without being directly fixed to the external member. Specifically, in the ultrasonic sealing unit 50, the retaining member 50e is in contact with the converter 50a via an elastic member 50f. The retaining member 50e is a ring-shaped member with a missing part. The retaining member 50e is provided in such a way that the missing part of the ring shape is on the upper side. For that reason, as shown in FIG. 10, the retaining member 50e retains the converter 50a from the left side, the right side, and the lower side. Because of this, the ultrasonic sealing unit 50 is retained. The retaining member 50e is fixed to an external member such as the attachment member 17a.

The elastic member 50f is provided between the retaining member 50e and the converter 50a. The elastic member 50f is formed from an elastic body such as rubber or sponge, for example. The elastic member 50f is adhered to the retaining member 50e. However, the elastic member 50f is not adhered to the converter 50a. For that reason, in a state in which the ultrasonic sealing unit 50 is retained by the retaining member 50e, the elastic member 50f is in contact with the converter 50a but is not connected to the converter 50a. In FIG. 10, three elastic members 50f are in contact with the left side, the right side, and the lower side of the side surface of the converter 50a.

In this way, the ultrasonic sealing unit 50 is fixed at the position of the fixing member 50d and is retained at the position of the retaining member 50e in the longitudinal direction of the ultrasonic sealing unit 50. That is, the position where the ultrasonic sealing unit 50 is fixed and the position where the ultrasonic sealing unit 50 is retained are different from each other in the longitudinal direction of the ultrasonic sealing unit 50.

Next, the details of the position of the fixing member 50d in the ultrasonic sealing unit 50 will be described. The ultrasonic sealing unit 50 vibrates in the longitudinal direction of the ultrasonic sealing unit 50 because of the ultrasonic waves generated by the converter 50a. Below, this vibration will be conveniently called the ultrasonic vibration of the ultrasonic sealing unit 50. FIG. 11 shows an example of waveforms of the ultrasonic vibration of the ultrasonic sealing unit 50 in a range from the tip of the horn 50b to the middle of the converter 50a in the forward and rearward direction. In FIG. 11, waveform W1 and waveform W2 are waveforms when the amplitude of the ultrasonic vibration is at a maximum. Waveform W1 and waveform W2 have nodes N where the amplitude is zero. Below, the nodes N of the waveforms of the ultrasonic vibration will simply be called the nodes N of the ultrasonic vibration.

In the ultrasonic sealing unit 50, the fixing member 50d is located in the position of a node N of the ultrasonic vibration of the ultrasonic sealing unit 50 in the forward and rearward direction.

### (4) Characteristics

### (4-1)

The bag making and packaging machine 1 is equipped with the bag making and packaging unit 3 that has the ultrasonic sealing unit 50 for ultrasonically sealing, in the longitudinal direction, the overlapping portion of both end portions of the cylindrical film Fc. The ultrasonic sealing unit 50 is mainly configured from the converter 50a, the horn 50b, the booster 50c, the fixing member 50d, and the retaining member 50e. The converter 50a, the booster 50c, and the horn 50b are disposed in this order heading from the front side toward the back side in the longitudinal direction of the ultrasonic sealing unit 50 (the forward and rearward direction).

The ultrasonic sealing unit 50 is fixed to the bag making and packaging machine 1 by the fixing member 50d. As shown in FIG. 11, the fixing member 50d is provided in the position of a node N of the ultrasonic vibration of the ultrasonic sealing unit 50 in the forward and rearward direction. Specifically, the fixing member 50d is provided in such a way that the node N of the ultrasonic vibration is positioned in the range occupied by the fixing member 50d in the forward and rearward direction. The node N of the ultrasonic vibration is a position where the amplitude of the ultrasonic vibration of the ultrasonic sealing unit 50 becomes zero. That is, the fixing member 50d is attached to a part where the amplitude resulting from the ultrasonic vibration of the ultrasonic sealing unit 50 is smallest. Because of this, the effect that the ultrasonic vibration of the ultrasonic sealing unit 50 has on the fixing member 50d and the effect that the fixing member 50d has on the ultrasonic vibration of the ultrasonic sealing unit 50 are minimized. If the fixing member 50d is not provided in the position of the node N of the ultrasonic vibration of the ultrasonic sealing unit 50, there is the concern that some of the ultrasonic vibration of the ultrasonic sealing unit 50 will be transmitted via the fixing member 50d to the body frame 10 and, as a result, the vibratory energy of the ultrasonic waves propagated from the horn 50b to the cylindrical film Fc will be reduced. Because of this, there is the potential for the frictional heat to not be sufficiently produced at the vertical seal V1 of the cylindrical film Fc and for the vertical seal quality to be reduced. Furthermore, there is the potential for the ultrasonic vibration that has been transmitted from the ultrasonic sealing unit 50 to the body frame 10 to cause noise and abnormal sounds that come from the bag making and packaging machine 1.

Furthermore, the ultrasonic sealing unit 50 is retained by the retaining member 50e. Specifically, the converter 50a is retained by the retaining member 50e with enough strength that there are no effects on the ultrasonic vibration of the ultrasonic sealing unit 50. In this way, the ultrasonic sealing unit 50 is not only fixed by the fixing member 50d to the bag making and packaging machine 1, it is also retained by the retaining member 50e. As a result, the ultrasonic vibration transmitted from the ultrasonic sealing unit 50 to the outside is reduced compared to a case where the ultrasonic sealing unit 50 is just fixed by fixing member 50d. For that reason, by retaining the converter 50a with the retaining member 50e, a situation where the vibratory energy of the ultrasonic waves propagated from the horn 50b to the cylindrical film Fc decreases and the vertical seal quality is reduced is inhibited. Furthermore, because ultrasonic vibration transmitted from the ultrasonic sealing unit 50 to the outside is reduced, noise and abnormal sounds that come from the bag making and packaging machine 1 are reduced.

### (4-2)

The retaining member 50e is provided in a position different from the fixing member 50d in the longitudinal direction of the ultrasonic sealing unit 50 (the forward and rearward direction). It is preferred that the retaining member 50e be provided in a position other than a node N of the ultrasonic vibration of the ultrasonic sealing unit 50. When the ultrasonic sealing unit 50 is retained in this way, the effect that being retained has on the ultrasonic vibration of the ultrasonic sealing unit 50 is reduced. As a result, a reduction in the vertical seal quality is inhibited, and noise and abnormal sounds that come from the bag making and packaging machine 1 are reduced.

### (4-3)

In the ultrasonic sealing unit 50, the converter 50a is retained by the retaining member 50e via the elastic member 50f. That is, the converter 50a contacts only the elastic member 50f and does not contact the retaining member 50e fixed to an external member. For that reason, the vibration of the converter 50a transmitted to the retaining member 50e is inhibited by the elastic member 50f. Because of this, the ultrasonic vibration of the ultrasonic sealing unit 50 is inhibited from being transmitted via the retaining member 50e to the outside, so a reduction in the vibratory energy of the ultrasonic waves propagated from the horn 50b to the cylindrical film Fc is inhibited. As a result, a reduction in the vertical seal quality is inhibited, and noise and abnormal sounds that come from the bag making and packaging machine 1 are reduced.

### (5) Example Modifications

An embodiment of the invention has been described above, but the invention is not limited to the above embodiment and can be changed in a variety of ways in a range that does not depart from the spirit of the invention.

### (5-1) Example Modification A

In the above embodiment, as shown in FIG. 10, the retaining member 50e has a ring shape with a missing part and is provided in such a way that the missing part of the ring shape is on the upper side. Furthermore, three elastic members 50f are provided between the retaining member 50e and the converter 50a in positions where the elastic members 50f contact the left side, the right side, and the lower side of the side surface of the converter 50a.

However, the shape and number of the retaining member 50e, the shape and number of the elastic member 50f, and the place where the converter 50a is retained by the retaining member 50e and the elastic member 50f are not limited to the configuration shown in FIG. 10. For example, the retaining member 50e may also support just the lower side of the side surface of the converter 50a via one elastic member 50f.

Furthermore, in the above embodiment, the elastic member 50f is adhered to the retaining member 50e, but at least part of the retaining member 50e may also be formed by an elastic body such as the elastic member 50f. For example, the entire retaining member 50e may also be formed by a ring-shaped elastic body and fixed to an external member. In this case, the converter 50a is directly retained by the retaining member 50e.

In the case of this example modification also, as in the embodiment, the ultrasonic vibration transmitted from the ultrasonic sealing unit 50 to the outside is reduced compared to a case where the ultrasonic sealing unit 50 is just fixed by the fixing member 50d. As a result, a reduction in the vertical seal quality is inhibited, and noise and abnormal sounds that come from the bag making and packaging machine 1 are reduced.

### (5-2) Example Modification B

In the above embodiment, the bag making and packaging unit 3 is equipped with the clamp fixing mechanism 18 that fixes the former structure and the longitudinal sealing structure to each other. The clamp fixing mechanism 18 appropriately maintains the positional relationship between the horn 50b of the ultrasonic sealing unit 50 and the anvil 51 of the tube 31 by fixing the positional relationship between the former structure and the longitudinal sealing structure so that it does not change mainly in the vertical direction.

In order to stabilize the vertical seal quality of the cylindrical film Fc resulting from the longitudinal sealing structure, it is important for the positional relationship between the horn 50b and the anvil 51 or the state of contact between the horn 50b and the anvil 51 to be appropriately regulated. For example, if the relative position where the horn 50b and the anvil 51 contact each other is even slightly different from a predetermined optimum position, there is the concern that the vertical seal quality will be reduced.

For that reason, in order to ensure the vertical seal quality, work for adjusting the positional relationship between the horn 50b of the longitudinal sealing structure and the anvil 51 of the former structure is necessary. However, for example, in the case of replacing the tube 31 of the former structure, there is the concern that this adjustment work will take time. Thus, it is preferred to simplify the work for aligning the longitudinal sealing structure and the former structure to make it possible to quickly perform the work of replacing the former structure.

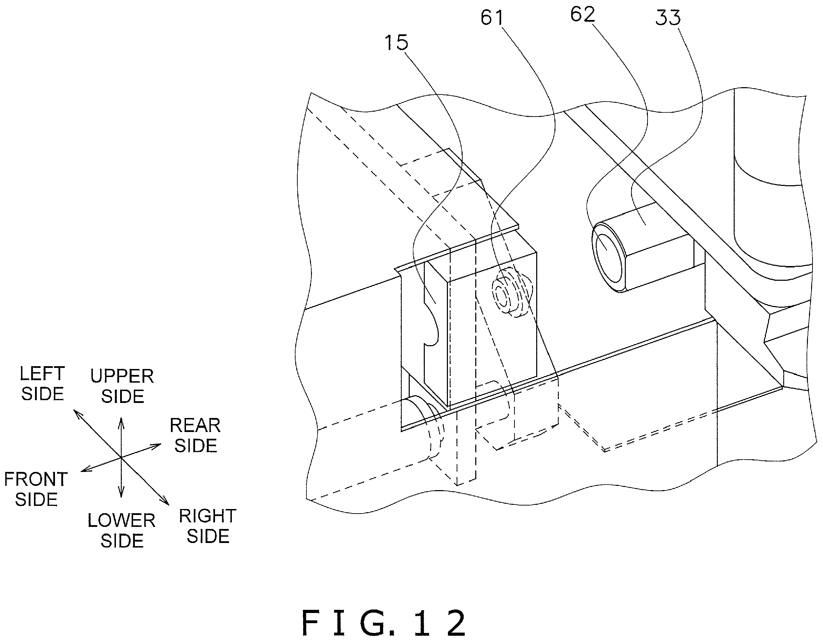

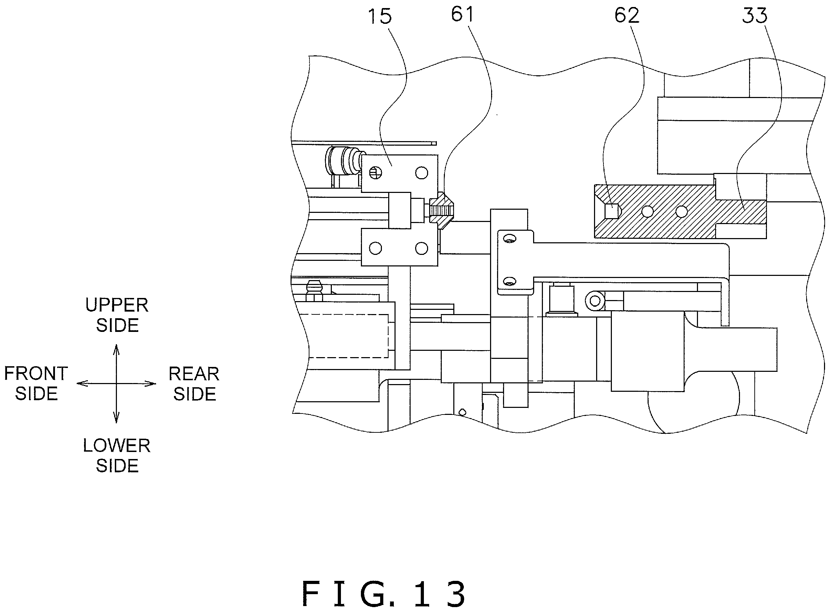

FIG. 12 and FIG. 13 show an example of a mechanism that can simplify the work for such alignment. FIG. 12 is an external view of an aligning mechanism between the former structure and the longitudinal sealing structure. FIG. 13 is a longitudinal sectional view of the aligning mechanism between the former structure and the longitudinal sealing structure.

In this aligning mechanism, the longitudinal sealing structure has a positioning pin 61 and the former structure has a pin hole 62. The positioning pin 61 is fixed to the longitudinal sealing mechanism 15. The positioning pin 61 is a projection that projects rearward and, as shown in FIG. 13, has a tapered cross-sectional shape. That is, the diameter of the positioning pin 61 decreases heading from the front side toward the rear side. The pin hole 62 is formed in the support frame 33 of the forming mechanism 13. The pin hole 62 has a shape into which the positioning pin 61 can be fitted. In a case where the positional relationship between the former structure and the longitudinal sealing structure is fixed, such as, for example, a case where the former structure is appropriately attached, the positioning pin 61 is fitted into the pin hole 62. In a case where the positional relationship between the former structure and the longitudinal sealing structure is not fixed, such as, for example, a case where the former structure is temporarily detached for replacement work, the positioning pin 61 is removed from the pin hole 62.

In this aligning mechanism, by relatively moving the positioning pin 61 and the pin hole 62 in the forward and rearward direction, the positioning pin 61 can be inserted and fitted into the pin hole 62, and the positioning pin 61 can be removed from the pin hole 62. The positioning pin 61 has a tapered shape. Because of this, when inserting the positioning pin 61 into the pin hole 62, the tip of the positioning pin 61 hits the opening of the pin hole 62, so it is less likely for a problem where the movement of the positioning pin 61 becomes obstructed to occur. For that reason, in this aligning mechanism, the positioning pin 61 can be smoothly inserted into the pin hole 62.

Consequently, in this example modification, it becomes easy to adjust the positional relationship between the positioning pin 61 and the pin hole 62 using the positioning pin 61 that has a tapered shape, so, for example, when replacing the former structure, the work of adjusting the positional relationship between the former structure and the longitudinal sealing structure can be simplified. As a result, the work of replacing the former structure can be quickly carried out, and a reduction in the vertical seal quality caused by inappropriate alignment of the former structure can be inhibited.

## Claims

1. An ultrasonic sealing unit comprising:
a converter that generates ultrasonic waves from an electrical signal;
a horn that vibrates because of the ultrasonic waves generated by the converter;
a fixing member for fixing the ultrasonic sealing unit; and
a retaining member for retaining the ultrasonic sealing unit in a position different from the position where the ultrasonic sealing unit is fixed by the fixing member.

2. The ultrasonic sealing unit according to claim 1, wherein
the fixing member is located in the position of a node of the ultrasonic vibration of the ultrasonic sealing unit, and
the retaining member is located in a position other than a node of the ultrasonic vibration of the ultrasonic sealing unit.

3. The ultrasonic sealing unit according to claim 1 or 2, wherein the retaining member is located in a position different from the fixing member in the direction of the ultrasonic vibration of the ultrasonic sealing unit.

4. The ultrasonic sealing unit according to any one of claims 1 to 3, further comprising a booster that is installed between the converter and the horn and amplifies the ultrasonic waves generated by the converter, wherein the fixing member is attached to the booster.

5. The ultrasonic sealing unit according to any one of claims 1 to 4, wherein the retaining member retains the ultrasonic sealing unit via an elastic member.

6. The ultrasonic sealing unit according to any one of claims 1 to 5, wherein the retaining member is attached to the converter.
